# DEMANDE DE BREVET EUROPEEN

(11) **EP 1 559 629 A1**
(43) Date de publication de la demande: **03.08.2005**
(21) Numéro de dépôt: 05100588.2
(22) Date de dépôt: 28.01.2005
(51) Int. Cl.: B62D 1/28

(54) **Dispositif d'aide à l'accostage de véhicules de transport en commun**

(30) Priorité: 29.01.2004 FR 0400839
(71) Demandeur: Compagnie Financière pour la Technologie, 33608 Pessac Cedex (FR); Garczynski Traploir Aquitaine, 33400 Talence (FR); Synd Mixte Trans En Commun Agglo Clerm, 63000 Clermont Ferrand (FR)
(72) Inventeur: Blouin, Jean-Louis, F-33000 Bordeaux (FR); Moulin, François, F-63170 Aubière (FR); Charlat, Patrice, F-77340 Pontault-Combault (FR); Gad, Jean-Rémy, F-33700 Merignac (FR)
(74) Mandataire: Schmit, Christian Norbert Marie

(57) **Abrégé**

- L'objet de l'invention est un dispositif d'aide à l'accostage de véhicules de transport en commun comportant des moyens à quai (2, 3) de détection de position longitudinale et latérale d'un véhicule par rapport à un quai et de déplacement du véhicule (1) par rapport à ce quai, un premier calculateur (4) relié audits moyens et agencé pour déterminer, à partir de signaux reçus des moyens à quai, la position relative du véhicule par rapport au quai et pour calculer des données représentatives d'informations de position du véhicule par rapport au quai, des premiers moyens d'émission/réception (5) aptes à transmettre lesdites données du premier calculateur (4) vers un deuxième calculateur (6) sur le véhicule au travers de deuxièmes moyens d'émission/réception (7) sur le véhicule (1), les moyens à quai (2, 3), le premier calculateur (4) et les premiers moyens d'émission/réception (5) constituant une station à quai (9), le deuxième calculateur (6) étant relié à des premiers moyens de signalisation (8) à destination du conducteur et agencé pour décoder lesdites données et fournir à partir de ces données des indications ou consignes au conducteur afin de le guider dans sa manoeuvre.

## Description

La présente invention concerne un dispositif d'aide à l'accostage de véhicules de transport en commun applicable notamment à un système d'aide à la sécurité des usagers et à l'accessibilité des véhicules en particulier applicable dans le cadre de l'assistance aux personnes à mobilité réduite.

Des systèmes de guidage de véhicules de transport en commun notamment pour l'aide à l'accostage d'un quai d'embarquement-débarquement des passagers existent.

Le document FR 2 752 807 décrit un dispositif d'assistance à la conduite d'un véhicule sur une chaussée basé sur un marquage codé au sol à l'entrée dans la station et sur toute sa longueur selon un tracé déterminé et un dispositif de détection du marquage codé à bord du véhicule relié à un système de commande des roues directrices du véhicule pour piloter la manoeuvre du véhicule à l'approche d'un quai.

Un tel dispositif est tributaire du marquage qui doit être toujours visible et réalisé précisément en fonction de la configuration du quai. En outre, le dispositif de vision et de reconnaissance doit être adapté en fonction des dimensions du véhicule. Le système de type système guidé comportant des moyens de mesure d'angle de braquage des roues et des moyens de commande des organes de direction du véhicule est complexe à mettre en oeuvre sur les véhicules.

Par ailleurs, le dispositif précité ne comporte pas de systèmes d'intelligence à quai assurant des fonctions telles qu'assurer la sécurité des personnes à quai.

De plus un tel système impose au véhicule de ralentir et de suivre le marquage à chaque arrêt, qu'il y ait ou non des passagers en attente, ce qui ne permet ni d'optimiser le circuit effectué par le véhicule ni de réduire son temps de parcours par la réduction des arrêts inutiles.

La présente invention a pour but de proposer un dispositif d'aide a l'accostage de véhicules de transport en commun apte à renseigner le conducteur sur la présence d'obstacles ou de conditions particulières au niveau du quai tout en offrant une souplesse et une sécurité de fonctionnement importante.

En particulier, la présente invention a pour but de proposer un dispositif permettant d'indiquer au conducteur si des personnes attendent le bus et si parmi elles, il y a des Personnes à Mobilité Réduite. En effet, il est nécessaire, pour faciliter l'embarquement des Personnes à Mobilité Réduite, de limiter la distance entre le quai et l'autobus. L'obtention d'une telle précision est conditionné par le suivi d'une trajectoire idéale sur les 100 derniers mètres parcourus par le bus.

Le dispositif selon l'invention est adapté en outre pour fournir au conducteur des indications ou consignes pour adapter sa trajectoire comprenant la position du bus par rapport au quai et la trajectoire de référence à employer avant et pendant l'accostage, afin de minimiser la lacune horizontale entre le véhicule et le quai.

Le dispositif selon l'invention fournira en particulier des informations telle que présence de clients ou personnes à mobilité réduite ainsi que des indications de trajectoires à respecter.

Ce dispositif est en outre adapté pour renseigner le conducteur sur d'autres évènements comme la présence d'obstacles en amont et en aval interdisant une bonne approche, la présence d'objets suspects, d'actes de vandalisme ou de personnes pouvant être heurtées par le véhicule quand il quitte son arrêt ou quand il s'en approche. Ce dispositif est ainsi d'une grande souplesse et améliore la sécurité.

Pour ce faire, le dispositif d'aide à l'accostage de véhicules de transport en commun comporte:
- au moins un moyen à quai de détection de position longitudinale et latérale d'un véhicule par rapport à un quai et de déplacement du véhicule par rapport à ce quai,
- un premier calculateur relié audits moyens et agencé pour déterminer, à partir de signaux reçus des moyens à quai, la position relative du véhicule par rapport au quai et pour calculer des données représentatives d'informations de position du véhicule par rapport au quai,
- des premiers moyens d'émission/réception aptes à transmettre lesdites données du premier calculateur vers un deuxième calculateur sur le véhicule au travers de deuxièmes moyens d'émission/réception sur le véhicule,
ledit moyen à quai, le premier calculateur et les premiers moyens d'émission/réception constituant une station à quai, le deuxième calculateur étant relié à des premiers moyens de signalisation à destination du conducteur et agencé pour décoder lesdites données et fournir à partir de ces données des indications ou consignes au conducteur afin de le guider dans sa manoeuvre.

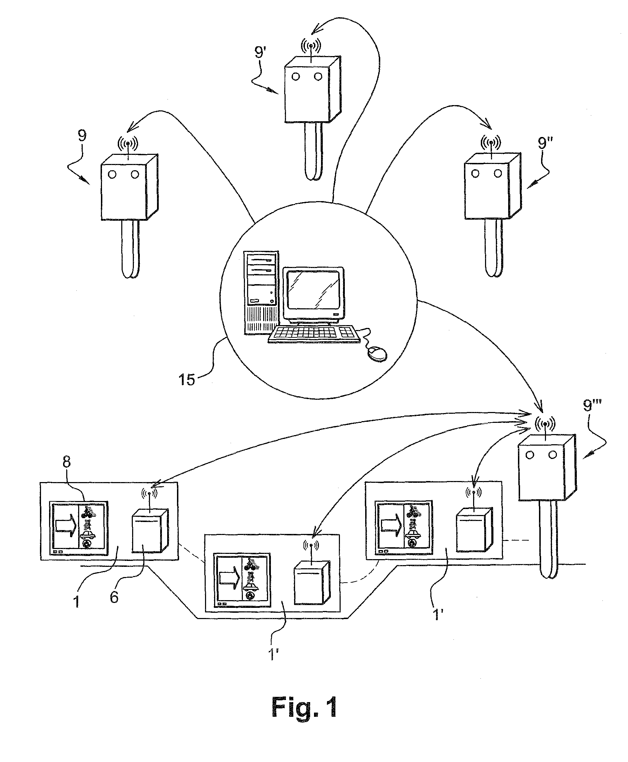

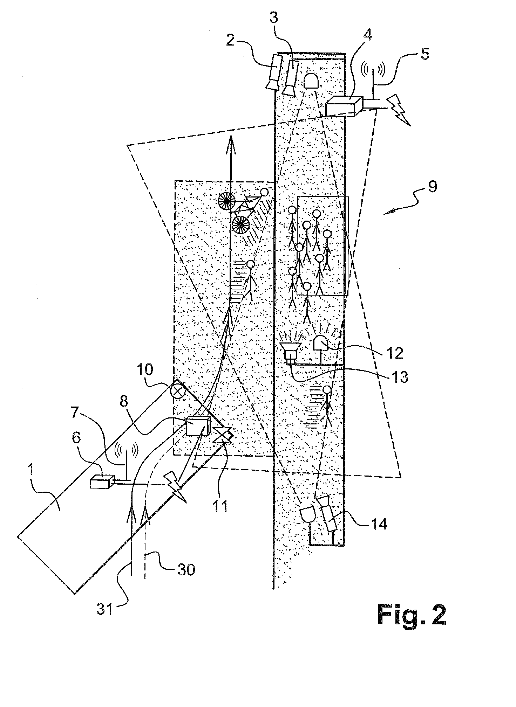

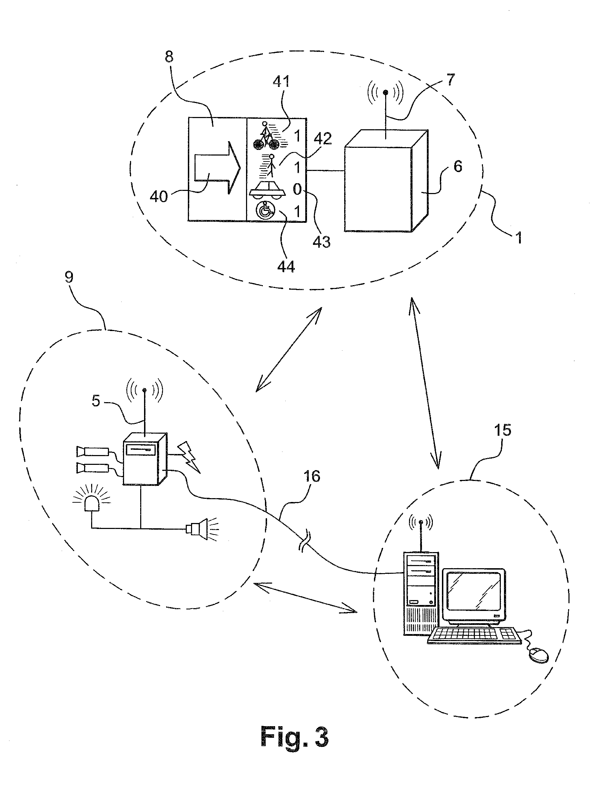

D'autres aspects et avantages de l'invention seront mieux compris à la lecture de la description qui va suivre d'un exemple de réalisation non limitatif de l'invention en référence aux figures qui représentent:
En figure 1: un schéma général d'un exemple de réalisation d'un dispositif de détection selon l'invention;
En figure 2: un schéma synoptique d'une station à quai du dispositif selon la figure 1;
En figure 3: un schéma détaillé de composants du dispositif de la figure 1.

La présente invention s'inscrit dans le cadre de l'amélioration de l'accessibilité des véhicules de transport en commun tels que les autobus.

Afin d'améliorer l'accessibilité trois facteurs entrent en jeu, le véhicule, le quai et le conducteur.

Pour tirer parti d'améliorations telles que véhicules à plancher bas, permettant l'embarquement et le débarquement de personnes à mobilité réduite notamment, il est nécessaire de garantir une distance d'arrêt du véhicule réduite par rapport au quai.

La présente invention vise à proposer un système tendant à obtenir en premier lieu une distance du véhicule au trottoir réduite de l'ordre de quelques centimètres permettant notamment l'embarquement et le débarquement de personnes en fauteuil roulant sans risquer que les roues du fauteuil se bloquent entre le véhicule et le quai. Le système pour ce faire analyse la position latérale du véhicule par rapport au quai.

Selon les exemples qui vont maintenant être décrits, le véhicule est reconnu de différentes façons.

La première consiste à doter les équipements sur quai d'un traitement d'image approprié (couplé si nécessaire aux moyens de communication) afin de reconnaître de façon pertinente et robuste un autobus dans la scène.

La deuxième, éventuellement complémentaire, consiste à équiper le véhicule de cibles passives pouvant être lues par les équipements sur quai.

Les dits moyens à quai comportent en particulier une caméra en sortie de quai dirigée vers la zone d'arrêt du véhicule complétée éventuellement d'une caméra en entrée de quai et un calculateur permettant la reconnaissance du véhicule par traitement d'image (éventuellement aidé par une reconnaissance des cibles précitées) et son positionnement dans l'espace.

Avantageusement, ce positionnement d'un objet dans un espace en deux dimension issu d'une scène (3D) connue permet de s'affranchir de moyens de mesures stéréoscopiques et permet donc de n'utiliser qu'une seule caméra.

Le positionnement de cet objet dans la scène étant dans ce cas non pas absolu mais relatif. Les divers exemples de réalisation ci-dessous illustrent ces principes.

En outre le système le système selon l'invention a pour but de guider le conducteur dans son approche notamment dans une direction longitudinale et d'aligner au mieux au moins l'une des portes passager avec un marquage au sol et/ou une zone d'embarquement-débarquement de personnes handicapées.

Ces objectifs doivent être remplis sans utiliser de moyens complexes de prise de contrôle automatisée du véhicule tout en veillant à la sécurité des passagers en attente sur la zone du quai.

Un objet principal est de fournir au conducteur les informations concernant la position du bus par rapport au quai et à une trajectoire de référence dans le but de minimiser la distance au quai ou lacune horizontale. Pour ce faire, le dispositif d'aide à l'accostage de véhicules de transport en commun comporte comme représenté en figure 2 des moyens à quai 2, 3 de détection longitudinale et latérale et de déplacement d'un véhicule 1.

Ces moyens selon l'exemple représenté en figure 2 comportent au niveau du quai des moyens à quai sous forme en premier lieu d'au moins une caméra 2 dirigée vers le véhicule arrivant.

Un moyen supplémentaire est constitué d'une caméra 14 située à l'opposée du quai.

Ces deux caméras sont reliées à un dispositif de reconnaissance visuelle dans un premier calculateur 4 agencé pour déterminer, à partir de signaux reçus de la première caméra 2, la position relative du véhicule par rapport au quai et pour calculer des données représentatives de cette position.

Selon l'exemple, une deuxième caméra 3 en bout de quai, dirigée vers le véhicule qui permet d'obtenir une image stéréoscopique du véhicule.

Les moyens à quai servent en outre de moyens de détection de personnes ou d'objets pouvant être accrochés par le véhicule ou ses appendices dans une zone de balayage. Ces moyens de détection reliés à la station à quai (annonce sonore ou visuelle) et activés sur approche du véhicule.

Ainsi les moyens de détection de présence d'obstacles utilisent les moyens de détection de position et de déplacement du véhicule. Cette détection de présence d'obstacles ou de personnes nécessite un traitement croisé des deux caméras sur le quai et un éventuel enregistrement d'images en boucles disponibles dans le premier calculateur.

Les moyens à quai permettent enfin de détecter des véhicules mal garés en amont gênant une trajectoire idéale ou en aval interdisant un départ sécurisé du véhicule, la partie arrière du véhicule devant déboîter pouvant alors balayer le quai.

Pour aider à la détection du véhicule mais de manière facultative, selon l'exemple, le véhicule comporte deux cibles 10, 11, espacées latéralement, les caméras 2, 3, le système de reconnaissance visuelle comportant des moyens de calcul et d'analyse d'images et aptes à déterminer la position longitudinale et latérale du véhicule par rapport au quai notamment par analyse stéréoscopique des images.

Il est toutefois possible de s'affranchir des cibles 10, 11 par comparaison d'une image de l'environnement avec l'image lorsque le véhicule arrive et en mesurant les différences.

Ainsi, le positionnement du véhicule dans l'espace est intégré dans le premier calculateur 4 et est comparé à une trajectoire de référence 30, cette trajectoire de référence prenant en compte la distance au quai à obtenir et le gabarit limite d'obstacles, ce gabarit étant le volume hors tout balayé par le bus et ses appendices externes tels que rétroviseurs ou autres lors de ses manoeuvres d'accostage et de départ du quai.

Le système ou station à quai 9 est pourvu de premiers moyens d'émission/réception 5 permettant de transmettre au véhicule 1 des données relatives à la trajectoire de référence 30 et à l'écart de trajectoire 31 du véhicule par rapport à cette trajectoire de référence 30. Le système selon l'invention privilégie l'instrumentation des quais par rapport à celle des véhicules.

Pour recevoir ces données, le véhicule 1 comporte des deuxièmes moyens d'émission/réception 7 qui transfèrent les données vers un deuxième calculateur 6 relié à des premiers moyens de signalisation 8 à destination du conducteur et agencé pour décoder lesdites données et fournir à partir de ces données des indications ou consignes au conducteur afin de le guider dans sa manoeuvre. Les premiers moyens de signalisation 8 sont représentés en figure 3 et comportent en premier lieu un afficheur 40 symbolisant sous forme expressive les consignes de manoeuvres à effectuer et notamment la direction que doit prendre le conducteur et une indication de la distance par rapport à une position d'arrêt longitudinale.

L'afficheur peut être remplacé par un dispositif de projection sur le pare brise comme un afficheur tête haute et afficher le gabarit à suivre.

Les moyens de signalisation 8 comportent en outre des indications 42, 43 et 44 relatives à l'environnement du quai qui seront détaillées plus loin.

Les moyens à quai 2, 3 peuvent comporter des moyens détecteurs de distance du véhicule ou de télémétrie, une combinaison d'une caméra et d'un détecteur de distance pouvant notamment être envisagée, une telle configuration permettant de réaliser un calcul de distance sans utiliser d'images stéréoscopiques issues de deux caméras, un système de comparaison d'images tel qu'évoqué plus haut est aussi envisageable selon l'invention.

Toujours en référence à la figure 2, et, pour ce qui concerne la station à quai, le dispositif comporte des moyens de détection de présence d'obstacles sur la zone d'accostage du véhicule et des deuxièmes moyens de signalisation à quai 12, 13. Les moyens de détection de présence d'obstacle comportent une partie logicielle dans le calculateur 4.

Dans le cas où les moyens 2, 3 de détection de position et de déplacement du véhicule 1 sont des caméras, les moyens de détection de présence d'obstacles peuvent utiliser les images vidéo issues de ces caméras. Ainsi, les caméras peuvent être reliées à un dispositif d'enregistrement par exemple disposé dans le calculateur 4 pour acquérir des séquences vidéo en boucle selon une durée déterminée.

Dans le cas ou une seule caméra 2 est utilisée, l'enregistrement des images permet de détecter les modifications d'environnement par comparaison d'images successives.

Selon l'exemple représenté, les moyens de détection de présence d'obstacles comprennent une caméra 14 complémentaire en début de quai et/ou en champ croisé, les moyens d'enregistrement d'images en boucle enregistrant par exemple les séquences des deux ou trois caméras alors que ces séquences mémorisées sont dérivées vers les moyens de détection de présence d'obstacles et sont traitées en parallèle par ces moyens de détection de présence d'obstacles pour analyser la zone de quai et servir de moyens de surveillance active, la connexion des caméras au calculateur permettant de prévoir des fonctions complémentaires en fonction de programmes associés tels que programme de détection d'objets suspects (objets immobiles), programmes de détection de mouvements de foules et/ou programmes de discrimination des personnes à mobilité réduite ou en fauteuil roulant. Cette caméra 14 peut en outre participer à la mesure de position longitudinale du véhicule 1 par rapport au quai.

Dans le but de permettre au conducteur de ne pas s'arrêter ou pour lui éviter de suivre la fonction d'accostage, le dispositif permet d'avertir le conducteur du véhicule de l'absence de personnes en attente à quai.

Dans une version simplifiée, et pour ne pas augmenter la charge cognitive du conducteur, le dispositif d'aide à l'accostage peut n'être actif qu'en présence de personnes à mobilité réduite.

Les moyens à quai de détection de personnes en attente permettent notamment de n'activer lesdits moyens de signalisation au conducteur qu'en présence de personnes en attente.

De plus, le dispositif peut être adapté pour que ces moyens à quai associés à une fonction du premier calculateur recevant l'information de l'arrivée du véhicule, peuvent déclencher une alarme visuelle ou sonore permet d'avertir les personnes pouvant être heurtées par le balayage du véhicule ou de ses appendices.

Cette fonction utilise, les moyens à quai, les premiers et deuxième moyens d'émission/réception 5, 7 et les moyens de calcul à quai pour activer l'alarme.

Dans le cadre de l'exemple représenté constituant un mode de réalisation enrichi du système, le véhicule 1 comprend des moyens de détermination de sa position sur son itinéraire tels qu'un dispositif GPS, les deuxièmes moyens d'émission/réception 7 comprenant des moyens d'émission vers la station à quai de données telles que distance du véhicule à la station, temps d'approche vers la station à quai ou demandes d'arrêt passager ce qui permet au travers du calculateur 4 d'activer les moyens de signalisation à quai 12, 13 et les moyens de détection de présence d'obstacle reliés à la station à quai 9 sur détection d'approche du véhicule 1. Lors de l'arrivée du véhicule à proximité du quai, la station à quai émet vers le véhicule les données relatives à l'environnement du quai telles que présence d'un obstacle 43, présence et nombre de personnes à quai ou de personnes à mobilité réduite 44, présence de mouvements sur la zone d'accostage 41, 42.

Au minimum, avant que le véhicule n'atteigne l'arrêt, une communication entre l'équipement à quai et l'équipement embarqué s'établit et les informations relatives à l'environnement à quai comme la présence d'un obstacle, de personnes à quai ou la présence de personnes à mobilité réduite sont transmises au véhicule.

De même, lorsque l'information de l'approche du véhicule est reçue par la station à quai 9, un dispositif de signalisation 12, 13 de type alarme sonore ou visuelle permet d'avertir les personnes situées sur la zone d'arrivée du véhicule 1.

La station à quai 9 est donc un dispositif de centralisation et de traitement d'informations concernant l'environnement du quai et la position du véhicule de transport en commun 1 et un dispositif de fourniture de données vers le véhicule et vers le public sur le quai.

Du fait de ses moyens de détection 2, 3 et 14 ainsi que de sa liaison au véhicule, la station à quai peut réaliser d'autres fonctions telles que comptage de passagers embarquant ou débarquant, pointer les véhicules en heure d'arrivée et heure de départ, détecter les mouvements de foule.

Dans le cadre d'un système global de gestion de plusieurs arrêts d'autobus, la station à quai 9 comprend des moyens 5, 16 de liaison avec un système central 15, ces moyens permettant la transmission d'informations enregistrées vers ce système central 15 apte à superviser une pluralité de stations à quai 9, 9', 9", ... et visualiser une pluralité d'informations émises par lesdites stations à quai et par une pluralités de véhicules 1, 1', 1", ....

L'invention n'est pas limitée au mode de réalisation représenté et la station à quai peut notamment comporter un plus grand nombre de capteurs et de périphériques tels que sources d'éclairage commandées en cas de présence d'usagers sur le quai ou à l'approche du véhicule 1.

## Revendications

1. Dispositif d'aide à l'accostage de véhicules de transport en commun comportant:
- au moins un moyen à quai (2, 3, 14) de détection de position longitudinale et latérale d'un véhicule par rapport à un quai et de déplacement du véhicule (1) par rapport à ce quai,
- un premier calculateur (4) relié audits moyens et agencé pour déterminer, à partir de signaux reçus des moyens à quai, la position relative du véhicule par rapport au quai et pour calculer des données représentatives d'informations de position du véhicule par rapport au quai,
- des premiers moyens d'émission/réception (5) aptes à transmettre lesdites données du premier calculateur (4) vers un deuxième calculateur (6) sur le véhicule au travers de deuxièmes moyens d'émission/réception (7) sur le véhicule (1),
ledit moyen à quai (2, 3, 14), le premier calculateur (4) et les premiers moyens d'émission/réception (5) constituant une station à quai (9), le deuxième calculateur (6) étant relié à des premiers moyens de signalisation (8) à destination du conducteur et agencé pour décoder lesdites données et fournir à partir de ces données des indications ou consignes au conducteur afin de le guider dans sa manoeuvre.

2. Dispositif d'aide à l'accostage selon la revendication 1 **caractérisé en ce que** le véhicule (1) comporte au moins une cible (10, 11), ledit moyen à quai comportant au moins une caméra (2) en bout de quai dirigée vers la zone d'arrivée du véhicule en entrée de quai et un système de reconnaissance visuelle de ladite cible (10, 11) et de son positionnement dans l'espace intégré dans le premier calculateur (4).

3. Dispositif d'aide à l'accostage selon la revendication 1 ou 2 **caractérisé en ce que** le véhicule (1) comprend deux cibles (10, 11) espacées latéralement, lesdits moyens à quai (2, 3) comportant deux caméras espacées reliées à des moyens de calcul et d'analyse d'images faisant partie du premier calculateur et aptes à déterminer la position longitudinale et latérale du véhicule par rapport au quai.

4. Dispositif selon la revendication 1 **caractérisé en ce que** ledit moyen à quai comporte au moins une caméra (2) en bout de quai dirigée vers la zone d'arrivée du véhicule en entrée de quai, le dispositif comportant un logiciel de traitement d'image intégré dans le premier calculateur (4) déterminant le positionnement dans l'espace du véhicule à partir d'une succession d'images.

5. Dispositif d'aide à l'accostage selon l'une quelconque des revendications 1 à 4 **caractérisé en ce que** ledit moyen à quai (2, 3) comporte des moyens détecteurs de distance du véhicule.

6. Dispositif d'aide à l'accostage selon l'une quelconque des revendications 1 à 5 **caractérisé en ce que** le véhicule (1 ) comprend des moyens de détermination de sa position sur son itinéraire, les deuxièmes moyens d'émission/réception (7) comprenant des moyens d'émission vers la station à quai de données telles que distance du véhicule à la station, temps d'approche vers la station à quai ou demandes d'arrêt passager.

7. Dispositif d'aide à l'accostage selon l'une quelconque des revendications précédentes **caractérisé en ce qu'**il comprend des moyens de détection de présence d'obstacles sur la zone d'accostage.

8. Dispositif selon les revendications 6 et 7 **caractérisé en ce qu'**il comprend des moyens de signalisation à quai (12, 13), les moyens de détection de présence d'obstacle et les moyens de signalisation à quai étant reliés à la station à quai (9) et activés sur détection d'approche du véhicule (1).

9. Dispositif selon la revendication 7 ou 8 **caractérisé en ce que** les moyens de détection de présence d'obstacles utilisent ledit au moins un moyenà quai (2, 3, 14).

10. Dispositif selon l'une des revendications précédentes **caractérisé en ce que** ledit moyen à quai comprend une caméra (14) complémentaire en début de quai et des moyens d'enregistrement d'images en boucle.

11. Dispositif selon l'une quelconque des revendications précédentes **caractérisé en ce que** la station à quai (9) comprend des moyens (5, 16) de transmission d'informations enregistrées et des moyens de liaison vers un système central (15) apte à superviser une pluralité de stations à quai (9, 9', 9", ...) et visualiser une pluralité d'informations émises par lesdites stations à quai et par une pluralités de véhicules (1, 1', 1", ...).

12. Dispositif selon l'une quelconque des revendications précédentes **caractérisé en ce qu'**il comprend des moyens à quai de détection de personnes en attente et des moyens de transmission de données relatives à la présence ou l'absence de personnes en attente au véhicule afin de n'activer lesdits moyens de signalisation qu'en présence de personnes en attente.

13. Dispositif selon la revendication 12 **caractérisé en ce que** lesdits moyens de détection de personnes comprennent ledit moyens à quai de détection de position longitudinale et latérale et de déplacement du véhicule.
